# EUROPÄISCHE PATENTSCHRIFT

(11) **EP 2 624 050 B1**
(45) Veröffentlichungstag und Bekanntmachung des Hinweises auf die Patenterteilung: **09.01.2019**
(21) Anmeldenummer: 13152948.9
(22) Anmeldetag: 28.01.2013
(51) Int. Cl.: G03B 13/06, G03B 13/10

(54) **Beleuchtungsanordnung für Bildfeldbegrenzungsrahmen einer Mischbildsucherkamera**
Illumination assembly for the limiting frame of the image field of a superimposed image viewfinder camera
Agencement d'éclairage pour cadre de limitation du champ d'image d'une caméra de recherche d'images mixtes

(30) Priorität: 01.02.2012 DE 102012001853
(43) Veröffentlichungstag der Anmeldung: 07.08.2013
(73) Patentinhaber: Leica Camera AG, 35578 Wetzlar (DE)
(72) Erfinder: Stieger, Horst, 35606 Solms (DE)
(74) Vertreter: Stamer, Jan

(56) Entgegenhaltungen:
- DE-A1- 4 001 056
- DE-A1- 19 912 117
- DE-A1- 19 962 712
- US-A- 5 361 119
- US-A- 5 754 900
- US-B1- 6 449 439

## Beschreibung

Die Erfindung betrifft eine Beleuchtungsanordnung mit den Merkmalen des Oberbegriffs des Anspruchs 1.

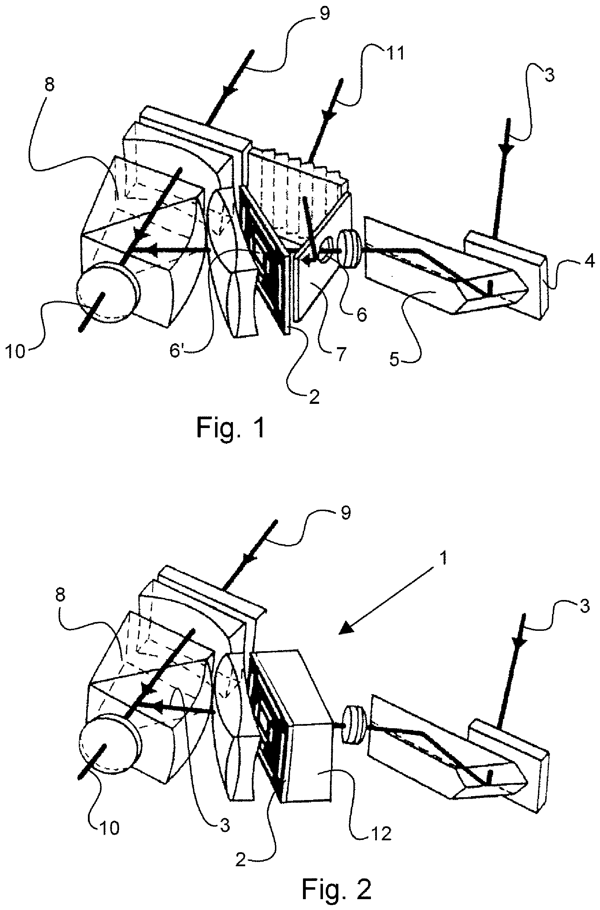

Eine solche Beleuchtungsanordnung ist beispielsweise dem in Figur 1 dargestellten Stand der Technik zu entnehmen. Figur 1 zeigt einen Mischbildsucher einer Messsucherkamera der Anmelderin, die unter der Marke Leica M6 zwischen 1984 und 1998 in großer Stückzahl verkauft wurden. Die Beleuchtung der Bildfeldbegrenzungsrahmen 2 erfolgt durch Umgebungslicht 11. Der Sucherstrahlengang 3 wird im Sucherprisma 8 mit einem Beobachtungstrahlengang 9 zu einem Mischbildsucherstrahlengang 10 überlagert.

Aus der DE 40 01 056 A1 ist ein Durchsichtsucher mit einem Beobachtungsstrahlengang bekannt. Ein mit Hilfe einer Maske gebildetes Sucherfeld wird durch ein Beleuchtungsfenster mit Umgebungslicht beleuchtet und nach Umlenkung und Abbildung über einen teildurchlässigen Spiegel in den Beobachtungsstrahlengang eingeblendet.

Aus der DE 199 62 712 A1 ist eine Anzeigevorrichtung für den Sucher einer einäugigen Spiegelreflexkamera bekannt. Leuchtdioden einer Lichtquelle werden in Abhängigkeit von Entfernungsmessdaten eingeschaltet und beleuchten Entfernungsmessbereichsmasken, die über eine Optik am Pentaprisma des Suchers eingespiegelt werden.

In bekannten Mischbildsucherkameras ist in den Sucherstrahlengang ein Bildfeldbegrenzungsrahmen eingefügt, der in die Ebene des Mischbildes des Suchers abgebildet wird. Der Sucherstrahlengang wird durch eine zentrale Öffnung im Bildfeldbegrenzungsrahmen hindurchgeführt. Die Beleuchtung des Bildfeldrahmens erfolgt über ein separates Fenster im Kameragehäuse passiv durch Umgebungslicht. Das führt bei hellem Umgebungslicht zu einer Überstrahlung der Abbildung der Bildfeldbegrenzungsrahmen und bei dunklerer Umgebungsbeleuchtung zu einer Kontrastminderung der Abbildung des Bildfeldbegrenzungsrahmens und daher zu Problemen bei der Scharfstellung im Mischbild des Suchers.

Die Bildfeldbegrenzungsrahmen sind bei Kameras mit Wechselobjektiven an die Brennweite des verwendeten Objektivs anzupassen. Dazu können auswechselbare Bildfeldbegrenzungsrahmen oder steuerbar veränderbare Bildfeldbegrenzungsrahmen vorgesehen sein. Der mechanische Aufwand dafür ist erheblich.

Der Sucherstrahlengang kann zusammen mit den Bildfeldbegrenzungsrahmen im Mischbildsucher quer zum Sucherstrahlengang verschiebbar angeordnet sein, um Parallaxen zwischen dem Beobachtungsbild und dem durch die Bildfeldbegrenzungsrahmen erzeugten Sucherbild auszugleichen. Zur Darstellung des Fokussierzustandes ist der Sucherstrahlengang bei der Objektfokussierung schwenkbar ausgeführt. Im Falle der richtigen Fokuslage stimmen die im Sucherprisma überlagerten Bilder des Sucherstrahlengangs und des Beobachtungsstrahlengangs überein.

Ein weiteres Problem bei bekannten Mischbildsucherkameras ist, dass unter jeder Beleuchtungsbedingung Streulicht dem Sucherstrahlengang überlagert wird. Dieser negative Effekt ist bei Abdunkelung sowohl des Beobachtungsstrahlengangs als auch des Sucherstrahlengangs als heller rechteckiger Fleck im Mischbildstrahlengang zu sehen. Im Falle dieser Abdunkelung sowohl des Beobachtungsstrahlengangs als auch des Sucherstrahlengangs sollten im Sucherprisma idealerweise nur noch die durch die Beleuchtungsanordnung über ein Fenster und einen Spiegel beleuchteten Bildfeldbegrenzungsrahmen sichtbar sein. Tatsächlich wird in unvorteilhafter Weise durch die herkömmliche Beleuchtungsanordnung über den Spiegel Streulicht der zentralen Öffnung, die nur zur Durchführung des Sucherstrahlengangs vorgesehen, ist zugeführt. Dies führt je nach Beleuchtungssituation und Blickwinkel des Benutzers in den Sucher in der normalen Benutzung zu einer unerwünscht kontrastarmen und flauen Abbildung des Sucherstrahlenganges bei der Überlagerung mit dem Bild des Beobachtungsstrahlengangs im Sucherprisma.

Der Erfindung lag daher die Aufgabe zugrunde, eine Beleuchtungsanordnung anzugeben, mit der auch bei wechselnden Umgebungslichtbedingungen eine gleichbleibende kontrastreiche Darstellung der Bildfeldbegrenzungsrahmen möglich ist und eine Überlagerung des Sucherstrahlengangs mit Streulicht vermieden wird. Diese Aufgabe wird bei einer Beleuchtungsanordnung der eingangs genannten Art durch die kennzeichnenden Merkmale des Anspruchs 1 gelöst. Vorteilhafte Weiterbildungen ergeben sich aus den Merkmalen der Unteransprüche.

Bei einer erfindungsgemäßen Beleuchtungsanordnung für einen Bildfeldbegrenzungsrahmen einer Mischbildsucherkamera mit einem Beobachtungsstrahlengang und einem Sucherstrahlengang ist die Beleuchtungsanordnung im Sucherstrahlengang in Lichtrichtung vor dem Bildfeldbegrenzungsrahmen angeordnet. Auf diese Weise ist eine gleichmäßige Hintergrundbeleuchtung der Bildfeldbegrenzungsrahmen in Durchlichtfunktion ohne vagabundierendes Streulicht im Bereich des Sucherprismas möglich. Eine kontrastreiche Darstellung der Bildfeldbegrenzungsrahmen bei der Einspiegelung im Sucherprisma und der Überlagerung im Mischbildstrahlengang ist gewährleistet. Die Beleuchtung ist in vorteilhafter Weise durch eine aktive Lichtquelle gebildet und auf diese Weise von der Helligkeit des Umgebungslichtes unabhängig. Der Sucherstrahlengang ist innerhalb der Beleuchtungsvorrichtung gegenüber der Lichtquelle mechanisch abgegrenzt, auf diese Weise erreicht kein Licht der aktiven Lichtquelle den Sucherstrahlengang und wird diesem somit auch nicht störend überlagert. Im Mischbild des Suchers ist dies daran zu erkennen, dass bei abgedecktem Fenster des Sucherstrahlengangs und des Beobachtungsstrahlengangs kein diffuses Feld am Ort der Mischbilderzeugung im Sucherprisma im Mischbildstrahlengang sichtbar ist.

In einer vorteilhaften Weiterbildung der Beleuchtungsanordnung ist der Sucherstrahlengang im Bereich der Beleuchtungsanordnung von einer lichtundurchlässigen Röhre umgeben, die eine zuverlässige mechanische Abgrenzung der Lichtquelle gegenüber dem Sucherstrahlengang gewährleistet.

In einer Weiterbildung der erfindungsgemäßen Beleuchtungsanordnung ist der Sucherstrahlengang gegenüber dem Beobachtungsstrahlengang innerhalb der Mischbildsucheranordnung schwenkbar und die Röhre trichterförmig ausgebildet. Auf diese Weise ist sichergestellt, dass es beim Schwenken des Sucherstrahlenganges zu keinen unerwünschten Abschattung der Bildränder des Sucherstrahlengangs kommt. Dieser Effekt wird zusätzlich in vorteilhafter Weise unterstützt, indem der Lichteintrittsseite des Trichters die größere Öffnung des Trichters zugeordnet ist und der Durchmesser der größeren Öffnung dem Schwenkbereich der optischen Achse des Sucherstrahlenganges bei der Fokuseinstellung angepasst ist. Auf diese Weise ist sichergestellt, dass der Bauraum im Innenbereich der Beleuchtungsanordnung nicht unnötig eingeschränkt wird und ausreichend Licht auch die kleinsten Maskenrahmen in nächster Umgebung der Durchführung für den Sucherstrahlengang erreicht.

In besonders vorteilhafter Weise besteht bei einer erfindungsgemäßen Beleuchtungsanordnung die Lichtquelle aus einer Mehrzahl von um die trichterförmige Röhre herum angeordneten LEDs, wobei zwischen den LEDs und den Bildfeldbegrenzungsrahmen ein Lichtdiffusor angeordnet ist. Auf diese Weise ist eine gleichmäßige Ausleuchtung der Bildfeldbegrenzungsrahmen gewährleistet. Als besonders vorteilhafte und gleichzeitig einfach handzuhabende Ausführung des Lichtdiffusors hat sich eine Streufolie bewährt. Insbesondere eine in mehreren Lagen übereinander angeordnete, vorzugsweise dreilagig ausgebildete Polyesterfolie, erzielt den gewünschten gleichmäßigen Streueffekt.

In einer weiteren Ausführungsform der Beleuchtungsanordnung ist an die Trichterseite mit der kleineren Öffnung ein zylindrisches Endteil angeformt, welches möglichst nahe an die Ebene der Bildfeldbegrenzungsrahmen heranragt, um eine Überlagerung von Streulicht im Bereich der Durchführung für den Sucherstrahlengang auszuschließen. Die Streufolie ist mit einer an die Geometrie des zylindrischen Endteils angepassten zentralen Öffnung auf dieses Endteil aufgeschoben, wobei die Länge des Endteils einen Abstand der Streufolie zum Bildfeldbegrenzungsrahmen bestimmt. In besonders vorteilhafter Weise wird somit eine Abstandshalterfunktion erreicht und eine definierte Distanz der Streufolie zur Ebene der Bildfeldbegrenzungsrahmen eingehalten. Die Bildfeldbegrenzungsrahmen befinden sich in einer Zwischenbildebene der Optik des Mischbildsuchers, damit sie sichtbar und scharf in den Mischbildstrahlengang im Sucherprisma überlagert abgebildet werden. Bei einer Anordnung der Streufolie mit ungenügendem Abstand zu den Bildfeldbegrenzungsrahmen würde die Struktur der Oberfläche der Streufolie ebenfalls im Sucherprisma dem Mischbildstrahlengang sichtbar überlagert werden, was unerwünscht ist.

In einer weiteren Ausgestaltung der Erfindung sind für die Beleuchtung LEDs mit unterschiedlicher Farbcharakteristik vorgesehen. Auf diese Weise lässt sich das Erscheinungsbild der Bildfeldbegrenzungsrahmen an die Wünsche und Bedürfnisse des Fotografen individuell anpassen. Zur optimalen automatischen Anpassung sind die LEDs nach Farbe und Helligkeit elektronisch steuerbar. Somit kann einerseits der Benutzer, beispielsweise über einen Menüpunkt der Kamera, eine gewünschte Farbe und Helligkeit vorwählen und einstellen, aber auch andererseits eine automatische Adaption an sich verändernde Umgebungslicht- und Helligkeitsbedingungen erfolgen. Eine immer optimale Darstellung der Bildfeldbegrenzungsrahmen ist auf diese Weise sichergestellt.

In besonders vorteilhafter Weise ist die Beleuchtungseinrichtung als geschlossener Kasten ausgebildet, in den zentral die Röhre für den Durchtritt des Sucherstrahlenganges eingesetzt ist. Auf diese Weise ist eine einfache Montage der Beleuchtungsanordnung gewährleistet und aufgrund einer lichtdichten Ausführung des Kasten jedwedes störendes Streulicht im Inneren der Mischbildsucheranordnung ausgeschlossen.

In einer weiteren Ausführungsform der Erfindung kann die automatische Steuerung der Helligkeit der Lichtquelle in Abhängigkeit der Umgebungshelligkeit proportional zwischen einem vorbestimmten Minimal- und einem Maximalwert geregelt werden. Zur Erzeugung von zwei Farben im Beleuchtungslicht können beispielsweise vier LEDs einer Farbe symmetrisch um die trichterförmige Röhre herum angeordnet sein und weitere vier einer anderen Farbe jeweils zwischen den LEDs erster Farbe. Sofern mehrfarbige LEDs vorgesehen sind, bestehen praktisch keine Grenzen in der Auswahl der individuellen Farbgestaltung durch den Benutzer.

Die Erfindung ist in der Zeichnung schematisch dargestellt und wird anhand eines Ausführungsbeispiels in den Figuren genauer beschrieben. Dabei zeigt:
- Fig. 1: eine Beleuchtungsanordnung für Bildfeldbegrenzungsrahmen einer Mischbildsucherkamera nach dem Stand der Technik,
- Fig. 2: eine schematische Darstellung einer erfindungsgemäßen Beleuchtungsanordnung im Sucherstrahlengang einer Mischbildsucherkamera,
- Fig. 3: eine Explosionsdarstellung der Beleuchtungsanordnung mit Bildfeldbegrenzungsrahmen,
- Fig. 4: eine geschnittene Darstellung einer zusammengebauten Beleuchtungsanordnung.

In Figur 1 ist eine Beleuchtungsanordnung für Bildfeldbegrenzungsrahmen 2 einer nicht weiter dargestellten Mischbildsucherkamera nach dem Stand der Technik dargestellt. Ein Sucherstrahlengang 3 tritt dabei durch ein Fenster 4 in den Mischbildsucher ein und wird mit einem Umlenk- und Aufrichtprisma 5 durch eine Lichtdurchtrittsöffnung 6 in einem Spiegel 7 und eine weitere Lichtdurchtrittsöffnung 6' im Bildfeldbegrenzungsrahmen 2 einem Sucherprisma 8 zugeführt. In dem Sucherprisma 8 wird einem Beobachtungsstrahlengang 9 der Sucherstrahlengang 3 zu einem Mischbildstrahlengang 10 überlagert. Die Beleuchtung der Bildfeldbegrenzungsrahmen 2 erfolgt durch Eintritt von Umgebungslicht 11 durch ein Prismenraster hindurch auf einen Spiegel 7, der es weiter in Richtung der Bildfeldbegrenzungsrahmen 2 ablenkt.

Figur 2 zeigt eine Darstellung eine erfindungsgemäße Beleuchtungsanordnung 1 im Sucherstrahlengang 3 einer nicht weiter dargestellten Mischbildsucherkamera. Die Beleuchtungsanordnung 1 ist schematisch als Kasten 12 im Sucherstrahlengang 3 in Lichtrichtung vor dem Bildfeldbegrenzungsrahmen 2 angeordnet. Ebenso wie in Fig. 1 dargestellt wird im Sucherprisma 8 dem Beobachtungsstrahlengang 9 der Sucherstrahlengang 3 zu einem Mischbildstrahlengang 10 überlagert.

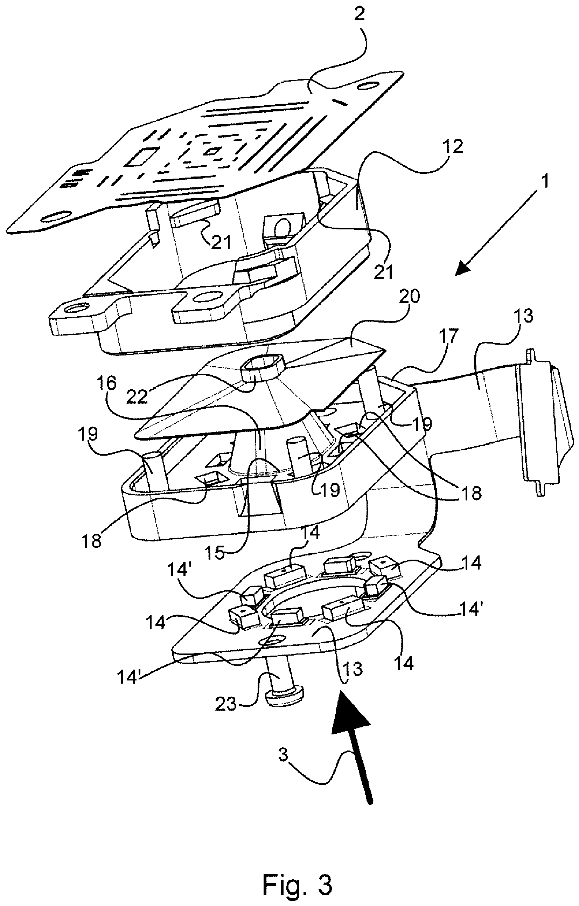

In Figur 3 ist eine Explosionsdarstellung der Beleuchtungsanordnung 1 mit einem Bildfeldbegrenzungsrahmen 2, der mehrere Schlitze zur Bildung von Leuchtrahmen unterschiedlicher Größe und weitere mechanische Ausbrüche zum Durchtritt von Licht aufweist, dargestellt. Der Sucherstrahlengang 3 wird schematisch durch einen Pfeil gebildet. Auf einem LED-Leiterband 13 sind LEDs 14 einer ersten Leuchtfarbe und LEDs 14' einer zweiten Leuchtfarbe symmetrisch um eine Öffnung herum angeordnet, die an die größere Öffnung 15 eines Trichters 16 angepasst ist. Das LED-Leiterband 13 ist vorzugsweise lichtundurchlässig ausgebildet und wird an einen LED-Halterahmen 17 mit LED-Öffnungen 18 angesetzt. Eine besonders sichere Verbindung des LED-Leiterbandes 13 durch den LED-Halterahmen 17 hindurch mit dem Kasten 12 wird durch eine Verschraubung 23 erzielt. Die LED-Öffnungen 18 im LED-Halterahmen 17 stellen die Ausrichtung der LEDs 14, 14' sicher und schirmen Streulicht ab. Der LED-Halterahmen 17 weist in seinen Ecken weiterhin vier symmetrisch angeordnete Klemmstifte 19 auf, die eine Streufolie 20 gegen vier korrespondierende und im Kasten 12 angeformte Folienauflageflächen 21 fixieren. Ein am Trichter 16 angeformtes zylindrisches Endteil 22 bildet eine innere rotationssymmetrische Auflage am Trichter 16 für die Streufolie 20. Das zylindrische Endteil 22 weist vorzugsweise eine Länge von ca. 1 mm auf.

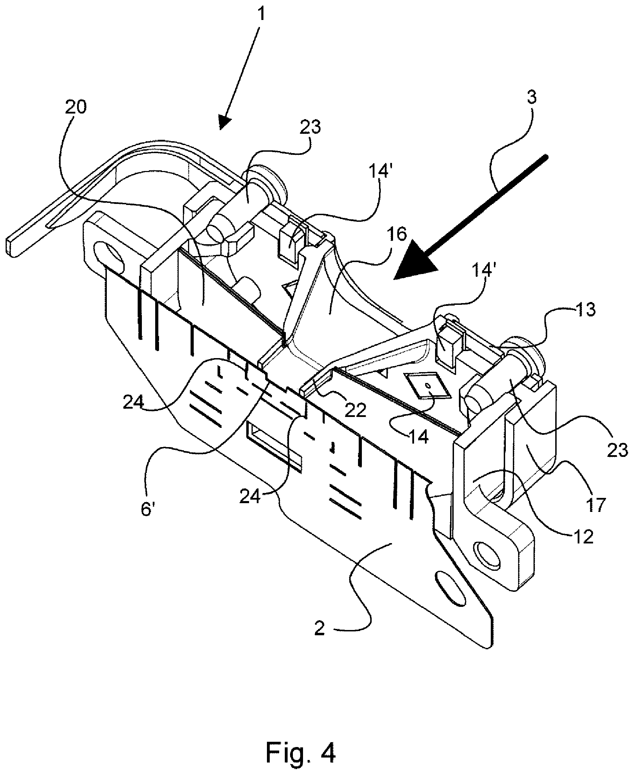

Die in Figur 4 dargestellte geschnittene Darstellung einer zusammengebauten Beleuchtungsanordnung 1 zeigt die Verschraubung 23 des LED-Leiterbandes 13 mit dem LED-Halterahmen 17 und dem Kasten 12. In Lichtrichtung vor dem am LED-Halterahmen 17 angeformten Trichter 16 mit zylindrischem Endteil 22 ist der Bildfeldbegrenzungsrahmen 2 mit einer Lichtdurchtrittsöffnung 6' für den Sucherstrahlengang 3 angeordnet. Die Streufolie 20 ist deutlich beabstandet zum Bildfeldbegrenzungsrahmen 2 angeordnet und liegt auf dem konusförmigen Rand des Trichters 16, zentriert durch das zylindrische Endteil 22, auf. Das Licht der LEDs 14,14' kann auf diese Weise ungehindert auch zu den Beleuchtungsschlitzen 24 für die kleinste Maskendarstellung gelangen, ohne in die Lichtdurchtrittsöffnung 6' für den Sucherstrahlengang 3 hineinzustrahlen.

### Bezugszeichenliste

- 1: Beleuchtungsanordnung
- 2: Bildfeldbegrenzungsrahmen
- 3: Sucherstrahlengang
- 4: Fenster
- 5: Aufrichtprisma
- 6: Lichtdurchtrittsöffnung
- 7: Spiegel
- 8: Sucherprisma
- 9: Beobachtungsstrahlengang
- 10: Mischbildsucherstrahlengang
- 11: Umgebungslicht
- 12: Kasten
- 13: LED-Leiterband
- 14, 14': LEDs
- 15: größere Öffnung des Trichters
- 16: Trichter
- 17: LED-Halterahmen
- 18: LED-Öffnungen
- 19: Klemmstifte
- 20: Streufolie
- 21: Folienauflageflächen
- 22: zylindrisches Endteil
- 23: Verschraubungen
- 24: Beleuchtungsschlitze

## Patentansprüche

1. Beleuchtungsanordnung (1) für einen Bildfeldbegrenzungsrahmen (2) einer Mischbildsucherkamera mit einem Beobachtungsstrahlengang (9) und einem Sucherstrahlengang (3), **dadurch gekennzeichnet, dass**
a) die Beleuchtungsanordnung (1) im Sucherstrahlengang (3) in Lichtrichtung vor dem Bildfeldbegrenzungsrahmen (2) angeordnet ist,
b) die Beleuchtung der Beleuchtungsanordnung (1) durch eine aktive Lichtquelle (14, 14') gebildet ist und
c) der Sucherstrahlengang (3) innerhalb der Beleuchtungsanordnung (1) gegenüber der Lichtquelle (14, 14') durch eine umgebende lichtundurchlässige Röhre (16, 22) mechanisch abgegrenzt ist.

2. Beleuchtungsanordnung nach Anspruch 1, **dadurch gekennzeichnet, dass** der Sucherstrahlengang (3) gegenüber dem Beobachtungsstrahlengang (9) schwenkbar und die Röhre (16, 22) trichterförmig ausgebildet ist.

3. Beleuchtungsanordnung nach Anspruch 2, **dadurch gekennzeichnet, dass** der Lichteintrittsseite des Trichters (16) die größere Öffnung (15) des Trichters (16) zugeordnet ist und der Durchmesser der größeren Öffnung (15) dem Schwenkbereich der optischen Achse des Sucherstrahlenganges (3) bei der Fokuseinstellung angepasst ist.

4. Beleuchtungsanordnung nach einem der Ansprüche 1 bis 3,
**dadurch gekennzeichnet, dass** die Lichtquelle aus einer Mehrzahl von um die trichterförmige Röhre (16, 22) herum angeordneten LEDs (14, 14') besteht.

5. Beleuchtungsanordnung nach Anspruch 4, **dadurch gekennzeichnet, dass** zwischen den LEDs (14, 14') und den Bildfeldbegrenzungsrahmen (2) ein Lichtdiffusor (20) angeordnet ist.

6. Beleuchtungsanordnung nach Anspruch 5, **dadurch gekennzeichnet, dass** der Lichtdiffusor aus einer Streufolie (20) besteht.

7. Beleuchtungsanordnung nach den Ansprüchen 3 und 5, **dadurch gekennzeichnet, dass** an die Trichterseite mit der kleineren Öffnung ein zylindrisches Endteil (22) angeformt ist und die Streufolie (20) auf das Endteil (22) aufgeschoben ist, wobei die Länge des Endteils (22) einen Abstand der Streufolie (20) zum Bildfeldbegrenzungsrahmen (2) bestimmt.

8. Beleuchtungsanordnung nach einem der Ansprüche 4 bis 7,
**dadurch gekennzeichnet, dass** LEDs (14, 14') mit unterschiedlicher Farbcharakteristik vorgesehen sind.

9. Beleuchtungsanordnung nach einem der Ansprüche 4 bis 8,
**dadurch gekennzeichnet, dass** die LEDs (14, 14') nach Farbe und Helligkeit elektronisch steuerbar sind.

10. Beleuchtungsanordnung nach einem der Ansprüche 1 bis 9,
**dadurch gekennzeichnet, dass** die Beleuchtungseinrichtung (1) als geschlossener Kasten (12) ausgebildet ist, in den zentral die Röhre (16, 22) für den Durchtritt des Sucherstrahlenganges (3) eingesetzt ist.

## Claims

1. Illumination arrangement (1) for an image field delimiting frame (2) of a mixed-image viewfinder camera having an observation beam path (9) and a viewfinder beam path (3), **characterized in that**
a) the illumination arrangement (1) is arranged in the viewfinder beam path (3) in the direction of light upstream of the image field delimiting frame (2),
b) the illumination of the illumination arrangement (1) is formed by an active light source (14, 14') and
c) the viewfinder beam path (3) is mechanically delimited within the illumination arrangement (1) with respect to the light source (14, 14') by a surrounding opaque tube (16, 22).

2. Illumination arrangement according to Claim 1, **characterized in that** the viewfinder beam path (3) is pivotable with respect to the observation beam path (9) and the tube (16, 22) is configured in the shape of a funnel.

3. Illumination arrangement according to Claim 2, **characterized in that** the light entry side of the funnel (16) is assigned the large opening (15) of the funnel (16), and the diameter of the large opening (15) is matched to the pivoting region of the optical axis of the viewfinder beam path (3) during focus setting.

4. Illumination arrangement according to one of Claims 1 to 3, **characterized in that** the light source comprises a plurality of LEDs (14, 14') arranged around the funnel-shaped tube (16, 22).

5. Illumination arrangement according to Claim 4, **characterized in that** a light diffuser (20) is arranged between the LEDs (14, 14') and the image field delimiting frames (2).

6. Illumination arrangement according to Claim 5, **characterized in that** the light diffuser comprises a diffusing film (20).

7. Illumination arrangement according to Claims 3 and 5, **characterized in that** a cylindrical end part (22) is formed integrally on the funnel side having the small opening, and the diffusing film (20) is pushed onto the end part (22), wherein the length of the end part (22) determines a distance of the diffusing film (20) from the image field delimiting frame (2).

8. Illumination arrangement according to one of Claims 4 to 7, **characterized in that** LEDs (14, 14') having different color characteristics are provided.

9. Illumination arrangement according to one of Claims 4 to 8, **characterized in that** the LEDs (14, 14') are electronically controllable in terms of color and brightness.

10. Illumination arrangement according to one of Claims 1 to 9, **characterized in that** the illumination device (1) is configured as a closed box (12), into which the tube (16, 22) for the through-passage of the viewfinder beam path (3) is inserted centrally.

## Revendications

1. Arrangement d'éclairage (1) pour un cadre de délimitation de champ d'image (2) d'une caméra à viseur à image mixte, comprenant un trajet de rayon d'observation (9) et un trajet de rayon de viseur (3), **caractérisé en ce que**
a) l'arrangement d'éclairage (1) est disposé dans le trajet de rayon de viseur (3) avant le cadre de délimitation de champ d'image (2) dans le sens de la lumière,
b) l'éclairage de l'arrangement d'éclairage (1) est formé par une source de lumière (14, 14') active et
c) le trajet de rayon de viseur (3) à l'intérieur de l'arrangement d'éclairage (1) est délimité mécaniquement par rapport à la source de lumière (14, 14') par un tube (16, 22) entourant opaque.

2. Arrangement d'éclairage selon la revendication 1, **caractérisé en ce que** le trajet de rayon de viseur (3) est réalisé de manière pivotante par rapport au trajet de rayon d'observation (9) et le tube (16, 22) en forme d'entonnoir.

3. Arrangement d'éclairage selon la revendication 2, **caractérisé en ce que** la plus grande ouverture (15) de l'entonnoir (16) est associée au côté d'entrée de la lumière de l'entonnoir (16) et le diamètre de la plus grande ouverture (15) est adapté à la plage de pivotement de l'axe optique du trajet de rayon de viseur (3) lors du réglage de la mise au point.

4. Arrangement d'éclairage selon l'une des revendications 1 à 3, **caractérisé en ce que** la source de lumière se compose d'une pluralité de LED (14, 14') disposées autour du tube (16, 22) en forme d'entonnoir.

5. Arrangement d'éclairage selon la revendication 4, **caractérisé en ce qu'**un diffuseur de lumière (20) est disposé entre les LED (14, 14') et le cadre de délimitation de champ d'image (2).

6. Arrangement d'éclairage selon la revendication 5, **caractérisé en ce que** le diffuseur de lumière se compose d'un film de diffusion (20).

7. Arrangement d'éclairage selon les revendications 3 et 5, **caractérisé en ce qu'**une partie d'extrémité cylindrique (22) est formée au niveau du côté de l'entonnoir ayant la plus petite ouverture et le film de diffusion (20) est emmanché sur la partie d'extrémité (22), la longueur de la partie d'extrémité (22) définissant un écart entre le film de diffusion (20) et le cadre de délimitation de champ d'image (2).

8. Arrangement d'éclairage selon l'une des revendications 4 à 7, **caractérisé en ce que** des LED (14, 14') ayant des caractéristiques de couleur différentes sont présentes.

9. Arrangement d'éclairage selon l'une des revendications 4 à 8, **caractérisé en ce que** les LED (14, 14') peuvent être commandées électroniquement en couleur et en luminosité.

10. Arrangement d'éclairage selon l'une des revendications 1 à 9, **caractérisé en ce que** l'arrangement d'éclairage (1) est réalisé sous la forme d'un coffret fermé (12) au centre duquel est disposé le tube (16, 22) pour la traversée du trajet de rayon de viseur (3).
